# EUROPÄISCHE PATENTANMELDUNG

(11) **EP 1 782 908 A1**
(43) Veröffentlichungstag der Anmeldung: **09.05.2007**
(21) Anmeldenummer: 06022791.5
(22) Anmeldetag: 02.11.2006
(51) Int. Cl.: B23K 11/11

(54) **Punktschweissklebeverbindung**

(30) Priorität: 05.11.2005 DE 102005052834
(71) Anmelder: AUDI AG, 85045 Ingolstadt (DE)
(72) Erfinder: Bär, Carsten, 85051 Ingolstadt (DE); Stopp, René, 85055 Ingolstadt (DE); Streifenberger, Markus, 85276 Tegenbach (DE)
(74) Vertreter: Geissler, Manfred

(57) **Zusammenfassung**

Die Erfindung betrifft eine Punktschweißklebverbindung an zwei flächig überlappenden Blechen (3, 4), wobei die Punktschweißklebverbindung (12) im Randbereich (1, 2) wenigstens eines Blechs (3, 4) liegt. Der Klebstoff ist zwischen den Blechen (3, 4) im überlappenden Randbereich als Klebstoffschicht (11) eingebracht. Der Schweißpunkt (5, 7) liegt im überlappenden Randbereich (1,2), wobei die Punktschweißung als elektrische Widerstandspressschweißung mittels Punktschweißelektroden (16, 17) bei nicht ausgehärteter Klebstoffschicht (11) durchgeführt wird. Erfindungsgemäß ist zwischen der Randkante (8) und dem Schweißpunkt (5, 7) im Ausbreitungsbereich von Schweißspritzern in wenigstens einem der Blechrandbereiche (1, 2) eine mechanische Formschwelle (10; 15; 18; 19; 20) gegen einen Durchstoß von Schweißspritzern bis zur Randkante (8) gebildet. Die Klebstoffschicht (11) ist dabei wenigstens zwischen der Formschwelle (10; 15; 18; 19; 20) und der Randkante (8) eingebracht.

## Beschreibung

Die Erfindung betrifft eine Punktschweißklebverbindung nach dem Oberbegriff des Anspruchs 1.

Punktschweißklebverbindungen werden vielfach im Fahrzeugbau und in der Luft- und Raumfahrttechnik zur korrosionsfesten und/oder dichten Verbindung von Blechen eingesetzt.

Eine gattungsgemäße Punktschweißklebverbindung an zwei flächig überlappenden Blechen ist aus der DE 38 15 069 C2 bekannt. Die Punktschweißklebverbindung liegt jeweils im Randbereich der Bleche. Der Klebstoff ist zwischen den Blechen im überlappenden Randbereich als Klebstoffschicht eingebracht und auch der Schweißpunkt liegt im überlappenden Randbereich. Die Punktschweißung ist als Widerstandsschweißung mittels Punktschweißelektroden bei noch nicht ausgehärteter Klebstoffschicht durchgeführt.

Konkret sind hier zwei ebene Randflansche der Bleche übereinanderliegend für eine korrosionsfeste, dichte Verbindung verklebt und verschweißt.

Zur Herstellung der Punktschweißklebverbindung wird ein flüssiger, ungehärteter Klebstoff z. B. als wärmehärtendes ein Komponenten-Epoxydharz oder ein selbst über eine bestimmte Zeit aushärtendes Zweikomponenten-Epoxydharz auf den Überlappungsbereich der Fügeteile aufgetragen. Die Fügeteile können in an sich bekannter Weise Stahlbleche, Aluminiumbleche oder verzinkte Stahlbleche sein. Die Fügeteile werden aufeinandergebracht und punktgeschweißt. Die Punktschweißung kann sowohl als Heftschweißung (DE 100 23 351 A1) zur Stabilisierung der Relativlage der beiden Fügeteile bei noch nicht ausgehärtetem Klebstoff und/oder zur Erhöhung der Stabilität der Verbindung verwendet werden. Bei der Punktschweißung wird durch den Elektrodendruck der noch nicht ausgehärtete Klebstoff lokal zwischen den Fügeteilen verdrängt, so dass es zu einer Kontaktierung und elektrischen Leitfähigkeit der Bleche untereinander kommt. Die Punktschweißverbindung entsteht durch Schmelzen und Erstarren des Werkstoffs an der Punktschweißstelle, wodurch es zur Ausbildung einer verbindenden Schweißlinse kommt. Die Wärme zum Schmelzen des Werkstoffs wird durch eine elektrische Widerstandserwärmung erzeugt, wobei der elektrische Strom sowie die Elektrodenpresskraft durch gegenüberliegend angesetzte Punktschweißelektroden übertragen werden. Der Klebstoff wird erst nachfolgend gehärtet, z. B. durch Wärmebehandlung bei einem Einkomponentnen-Klebesystem oder in Folge der selbsttätigen Härtung bei einem Zweikomponenten-Klebesystem.

Punktschweißklebverbindungen in der vorstehenden Art müssen somit vor der Vernetzung und Härtung des Klebstoffs punktgeschweißt werden, da sonst die elektrische Kontaktierung der Bleche über den Elektrodendruck nicht mehr gegeben ist und damit die Punktwiderstandsschweißung nicht möglich ist. Problematisch bei der Punktschweißung sind Schweißspritzer zwischen den übereinanderliegenden Blechen, die sich in der Praxis nicht vollständig vermeiden lassen. In Versuchen hat sich gezeigt, dass sich Schweißspritzer als heiße geschmolzene Metallspritzer in allen Richtungen vom Schweißpunkt ausbreiten können. Somit können auftretende Schweißspritzer aufgrund ihrer hohen Energie die Klebstoffschicht bis zur Randkante durchschlagen, wodurch ein kanalförmiger Gang vom Schweißpunkt durch die Klebstoffschicht bis zur äußeren Umgebung durchstoßen wird. Da vielfach insbesondere im Fahrzeugbau neben einer hohen Festigkeit von Punktschweißklebverbindungen auch deren Dichtigkeit gefordert wird, ist diese bei einem mit einer Kanalausbildung durchgeschlagenen Schweißspritzer nicht mehr gegeben. Ebenso ist dadurch die Korrosionsanfälligkeit erhöht. Die vorstehende Problematik ergibt sich insbesondere bei der üblichen Verwendung und Verbindung ebener Randflansche zweier Blechbauteile, wobei die Schweißpunkte relativ nahe an Randkanten und damit innerhalb des möglichen Durchschlagsbereichs hochenergetischer Schweißspritzer liegen.

Das vorstehende Dichtheitsproblem wird bisher dadurch gelöst, dass die Punktschweißklebverbindungen mit eventuellen Schweißspritzer-Durchschlagkanälen nach der Herstellung in einem weiteren Arbeitsgang abgedichtet werden. Eine solche zusätzliche Maßnahme verursacht insbesondere Kosten, erhöht die Fertigungszeit und führt zu einer unerwünschten Gewichtserhöhung.

Aufgabe der Erfindung ist es daher, eine gattungsgemäße Punktschweißklebverbindung so weiterzubilden, dass eine Dichtheit auch bei auftretenden Schweißspritzern gewährleistet ist.

Diese Aufgabe wird mit den Merkmalen des Anspruchs 1 gelöst.

Gemäß Anspruch 1 ist zwischen der Randkante und dem Schweißpunkt im Ausbreitungsbereich von Schweißspritzern in wenigstens einem der Blechrandbereiche eine mechanische Formschwelle gegen einen Durchstoß von Schweißspritzern bis zur Randkante gebildet. Dabei ist wenigstens zwischen der Formschwelle und der Randkante die Klebstoffschicht eingebracht.

Bei einer solchen Ausbildung werden Schweißspritzer, die sich in Richtung der Randkante zwischen den übereinanderliegenden Blechen ausbreiten, an der mechanischen Formschwelle gestoppt oder zumindest stark abgebremst und an einem Durchstoß der Klebstoffschicht bis zur Außenseite der Randkante gehindert. Da wenigstens zwischen der Formschwelle und der Randkante die Klebstoffschicht eingebracht ist, können somit durch Schweißspritzer keinen kanalartigen Durchbrüche vom Schweißpunkt bis über die Randkante hinaus auftreten, so dass damit die Dichtheit und Korrosionsfestigkeit der Punktschweißklebverbindung gewährleistet ist. Eine solche Punktschweißklebverbindung kann bei zwei, ggf. auch bei drei oder vier übereinanderliegenden Blechen mit jeweils dazwischen eingefügter Klebstoffschicht realisiert werden.

Die Klebstoffschicht kann sich nach Anspruch 2 auch in den Bereich des Schweißpunkts erstrecken, wobei dann durch die Klebstoffschicht in der eingangs erwähnten Art geschweißt wird. Dabei auftretende Schweißspritzer können die Klebstoffschicht dann allenfalls nur bis zur Formschwelle durchdringen und die Dichtheit der Verbindung ist auch hier gewährleistet.

In einer besonders bevorzugten Ausführungsform nach Anspruch 3 ist ein Längsrandbereich wenigstens eines Blechs eines Blechbauteils mit dem anderen Blech eines weiteren Blechbauteils dicht durch eine in der fertigen Verbindung ausgehärtete, bandförmige Längsklebstoffschicht verbunden, wobei in Längsrichtung zueinander versetzt Schweißpunkte liegen und die im Blech ausgebildete Formschwelle entsprechend in Längsrichtung verläuft. Die bandförmige Längsklebstoffschicht kann hier zur Randkante hin versetzt neben der Linie mit den Schweißpunkten liegen oder so breit gewählt sein, dass die Formschwelle und die Schweißpunkte in der Längsklebstoffschicht liegen.

Die mechanische Formschwelle kann geometrisch unterschiedlich je nach den Gegebenheiten und den zur Verfügung stehenden Formmöglichkeiten ausgebildet sein, wobei jedoch die Funktion zur Abbremsung und Abstoppung von Schweißspritzern noch vor dem Durchstoßen einer Klebstoffschicht jeweils gegeben sein muss:
Nach Anspruch 4 kann eine solche Formschwelle als Formstufe ausgebildet sein, wobei vorzugsweise nach Anspruch 5 eine solche Formstufe in beiden übereinanderliegenden Blechen ausgebildet ist mit einer Stufenhöhe entsprechend etwa einer Blechstärke oder mehr, in jedem Fall größer als die Dicke der Klebstoffschicht.

Gemäß Anspruch 6 ist alternativ eine Formschwelle durch eine Bogenstruktur gebildet, wobei auch hier beide Bleche vorzugsweise parallel geführt sind. Nach Anspruch 7 kann in einer ähnlichen Ausbildung auch eine dachförmige Dreiecksstruktur gewählt werden.

In einer besonders einfach und kostengünstig herstellbaren Ausführungsform nach Anspruch 8 ist die Formschwelle durch jeweils einen abgekanteten Randfalz beider parallel übereinanderliegender Bleche gebildet, wobei zumindest im Randfalzbereich die Klebstoffschicht angebracht ist. Der Abkantwinkel muss dabei zumindest so groß sein, dass auftretende Schweißspritzer an der Abkantung abgestoppt werden, wodurch sich nach Anspruch 9 ein bevorzugter Abkantwinkel zwischen 30° bis 90° ergibt.

Mit den Merkmalen des Anspruchs 10 wird eine weitere alternative Ausbildung der Formschwelle durch eine Bördelkante eines Blechteils vorgeschlagen, welche an der Randkante des anderen Blechteils aufgebogen ist, vorzugsweise in der Höhe einer Blechteilstärke.

Anhand einer Zeichnung wird die Erfindung näher erläutert.

Es zeigen:
- Fig. 1a, 1b: eine Punktschweißklebverbindung im Längsrandbereich zweier Bleche mit einer Formstufe als Formschwelle,
- Fig. 2: eine Anordnung entsprechend Fig. 1 mit einer alternativen Ausbildung einer Formschwelle durch eine Bogenstruktur sowie eine schematische Anordnung einer Punktschweißeinrichtung,
- Fig. 3: eine Anordnung entsprechend Fig. 1 mit einer Formschwelle als dachförmige Dreiecksstruktur,
- Fig. 4 u. 5: eine Anordnung entsprechend Fig. 1 mit einer Formschwelle in der Art eines abgekanteten Randfalzes, und
- Fig. 6: eine Anordnung entsprechend Fig. 1 mit einer Formschwelle durch eine Bördelkante.

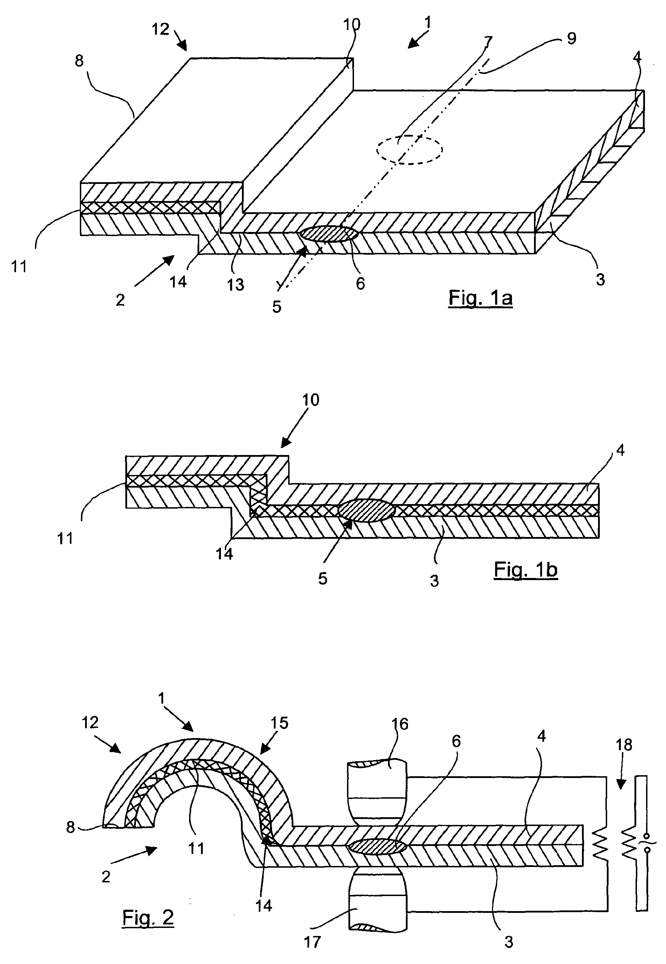

In Fig. 1a sind Längsrandbereiche 1, 2 von zwei flächig übereinanderliegenden und überlappenden Blechen 3, 4 schematisch dargestellt. Die Längsrandbereiche 1, 2 sind mittels einer Punktschweißklebverbindung verbunden, wobei ein Querschnitt durch einen Schweißpunkt 5 mit einer Schweißlinse 6 dargestellt ist. Weitere Schweißpunkte liegen dazu in Längsrichtung versetzt, von denen ein weiterer Schweißpunkt 7 strichliert eingezeichnet ist.

Die Schweißpunkte 6, 7 liegen auf einer Längslinie 9, versetzt in Querrichtung zur Randkante 8, welche von den Blechkanten beider Bleche 3, 4 gebildet ist.

Zwischen der Längslinie 9 bzw. den Schweißpunkten 6, 7 und der Randkante 8 ist als Formschwelle eine in Längsrichtung verlaufende Formstufe 10 jeweils durch eine Blechkantung gebildet, wobei die beiden Bleche 3, 4 flächig übereinanderliegen. Im Bereich zwischen der Formstufe 10 und der Randkante 8 ist zwischen den Blechen 3, 4 eine Klebstoffschicht 11 als bandförmige Längsklebstoffschicht eingebracht.

Zur Herstellung der durch die Klebstoffschicht 11 und die Schweißpunkte 5, 7 gebildeten Punktschweißklebverbindung 12 wird die Klebstoffschicht 11 mit einem noch ungehärteten Klebstoff aufgetragen, dann die beiden Bleche 3, 4 als Fügeteile aufeinandergebracht und anschließend punktgeschweißt. Möglicherweise auftretende Schweißspritzer mit einer Ausbreitungsrichtung in Richtung zur Randkante können im Bereich 13, wo die beiden Bleche 3, 4 eben übereinanderliegen, allenfalls bis zur Schwellenwand 14 gelangen, welche durch die Stufenaufkantung am Blech 3 gebildet ist. Schweißspritzer deren Energie auch für einen weiteren Ausbreitungsweg ausreichend wäre, werden hier sicher von einem weiteren Eindringen oder Durchdringen der Klebstoffschicht 11 abgehalten, so dass die Klebstoffschicht 11 eine sichere Abdichtung zum Bereich der Randkante 8 hin gewährleistet.

Die Ausführungsform nach Fig. 1 b entspricht weitgehend der aus Fig. 1a mit dem Unterschied, dass die Klebstoffschicht 11 breiter ist und sich in den Schweißbereich mit dem Schweißpunkt 5 erstreckt. Es wird dann wie vorstehend ausgeführt durch die Klebstoffschicht 11 geschweißt. Prinzipiell kann sich auch bei den Ausführungsformen der Fig. 2 bis 5 die Klebstoffschicht 11 ebenfalls bis in den Schweißbereich erstrecken.

In den Fig. 2 bis 6 ist jeweils eine ähnliche Anordnung von zwei Blechen 3, 4 mit einer Punktschweißklebverbindung 12 gezeigt, wobei die Längserstreckung der Bleche aus Gründen der Übersichtlichkeit nicht mehr dargestellt ist. Entsprechende Merkmale und Bauteile sind mit gleichen Bezugszeichen versehen:
In Fig. 2 ist in einer alternativen Ausführungsform die Formschwelle in der Art einer längsverlaufenden Bogenstruktur 15 ausgebildet, wobei die Schwellenwand 14 zur Abbremsung möglicher Schweißspritzer durch den Bogenansatz des unteren Blechs 3 gebildet ist. Zudem ist in Fig. 2 schematisch eine Punktschweißvorrichtung mit Punktschweißelektroden 16, 17 und einem Schweißtrafo 18 eingezeichnet.

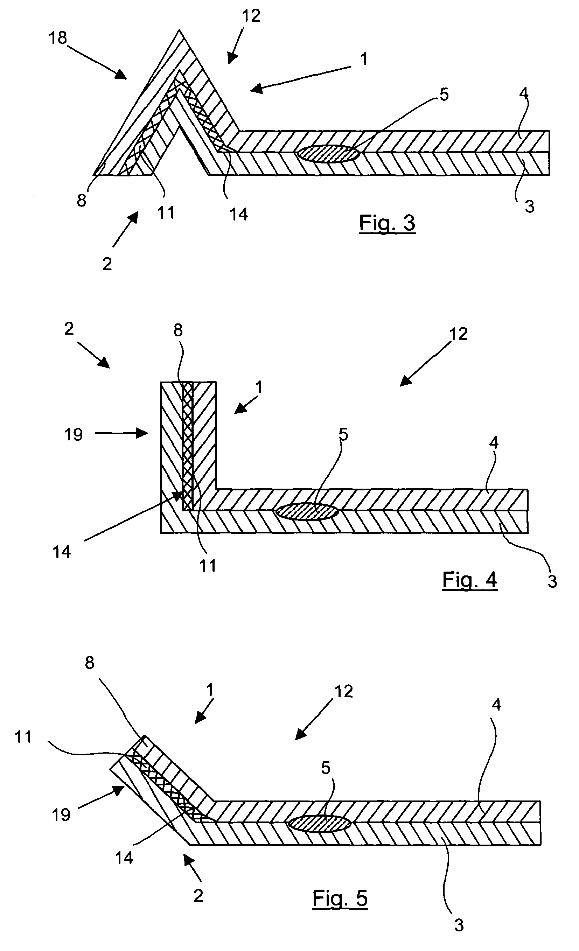

In einer ähnlichen Ausführungsform wie Fig. 2 ist in Fig. 3 anstelle der Bogenstruktur 15 eine dachförmige Dreieckstruktur 18 gewählt, wobei die Schwellenwand 14 zum Abbremsen möglicher Schweißspritzer am Aufkantungsbeginn des Bleches 3 liegt. Wenn dort ein Schweißspritzer noch in die Klebstoffschicht 11 eindringt, wird er jedenfalls soweit abgebremst und verliert soviel Energie, dass er nicht mehr die Dreiecksspitze umrunden kann und in den Bereich der Randkante 8 gelangen kann.

In der weiteren Ausführungsform nach Fig. 4 ist die Formschwelle durch jeweils einen abgekanteten Randfalz beider Bleche 3, 4 gebildet, wobei die Klebstoffschicht 11 im Randfalzbereich angebracht ist. Die Schwellenwand 14 zur Abstoppung/Abbremsung eventueller Schweißspritzer ist an der Abkantung des Blechs 3 gebildet.

Die Ausführungsform in Fig. 5 entspricht weitgehend der Ausführungsform nach Fig. 4. In Fig. 5 ist lediglich anstelle des 90°-Abkantwinkels aus Fig. 4 ein flacherer Abkantwinkel gewählt. Die Schrägstellung an der Schwellenwand 14 muss jedoch so steil sein, dass mögliche Schweißspritzer soweit abgelenkt und damit abgebremst werden, dass sie die Klebstoffschicht 11 nicht bis zur Randkante 8 hin durchschlagen können.

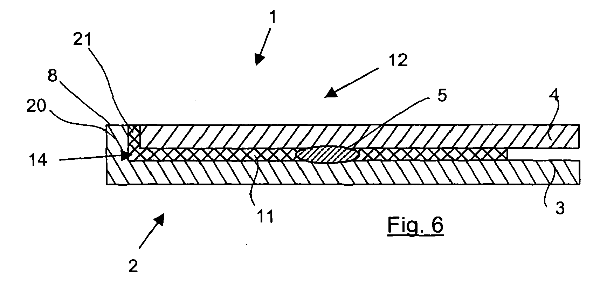

In der Ausführungsform nach Fig. 6 ist die Formschwelle durch eine Bördelkante 20 des Blechs 3 gebildet, die an der Längskante 21 des Blechs 4 in Höhe der Blechstärke aufgebogen ist, so dass sich insgesamt an der Oberfläche eine Ebene ergibt. Die Schwellenwand 14 zum Abstoppen eventueller Schweißspritzer ist hier im Bereich der Aufkantung des Blechs 3 gebildet.

In der Ausführungsform nach Fig. 6 erstreckt sich die Klebstoffschicht 11 in einem breiteren Band in Längsrichtung und überdeckt damit den Bereich der Schweißpunkte 5.

## Patentansprüche

1. Punktschweißklebverbindung an wenigstens zwei flächig überlappenden Blechen (3, 4), wobei
die Punktschweißklebverbindung (12) im Randbereich (1, 2) wenigstens eines Blechs (3, 4) liegt
- der Klebstoff zwischen den Blechen (3, 4) im überlappenden Randbereich als Klebstoffschicht (11) eingebracht ist, und
- der Schweißpunkt (5, 7) im überlappenden Randbereich (1, 2) liegt, wobei die Punktschweißung als elektrische Widerstandspressschweißung mittels Punktschweißelektroden (16, 17) bei nicht ausgehärteter Klebstoffschicht (11) durchgeführt wird,
**dadurch gekennzeichnet,**
**dass** zwischen der Randkante (8) und dem Schweißpunkt (5, 7) im Ausbreitungsbereich von Schweißspritzern in wenigstens einem der Blechrandbereiche (1, 2) eine mechanische Formschwelle (10; 15; 18; 19; 20) gegen einen Durchstoß von Schweißspritzern bis zur Randkante (8) gebildet ist, und
**dass** wenigstens zwischen der Formschwelle (10; 15; 18; 19; 20) und der Randkante (8) die Klebstoffschicht (11) eingebracht ist.

2. Punktschweißklebverbindung nach Anspruch 1, **dadurch gekennzeichnet, dass** sich die Klebstoffschicht (11) in den Bereich des Schweißpunkts (5, 7) erstreckt.

3. Punktschweißklebverbindung nach Anspruch 1 oder Anspruch 2, **dadurch gekennzeichnet, dass** ein Längsrandbereich (1, 2) wenigstens eines Blechs (3) eines Blechbauteils mit dem anderen Blech (4) dicht durch eine in der fertigen Verbindungen ausgehärtete, bandförmige Längsklebstoffschicht (11) verbunden ist, wobei in Längsrichtung (9) zueinander versetzt Schweißpunkte (5, 7) liegen und die Formschwelle (10; 15; 18; 19; 20) entsprechend in Längsrichtung verläuft.

4. Punktschweißklebverbindung nach einem der Ansprüche 1 bis 3, **dadurch gekennzeichnet, dass** die Formschwelle als Formstufe (10) ausgebildet ist.

5. Punktschweißklebverbindung nach Anspruch 4, **dadurch gekennzeichnet, dass** die Formstufe (10) an beiden übereinanderliegenden Blechen (3, 4) ausgebildet ist mit einer Stufenhöhe entsprechend etwa einer Blechstärke oder mehr, in jedem Fall größer als die Dicke der Klebstoffschicht.

6. Punktschweißklebverbindung nach einem der Ansprüche 1 bis 3, **dadurch gekennzeichnet, dass** die Formschwelle durch eine Bogenstruktur (15) gebildet ist.

7. Punktschweißklebverbindung nach einem der Ansprüche 1 bis 3, **dadurch gekennzeichnet, dass** die Formschwelle durch eine dachförmige Dreieckstruktur (18) gebildet ist.

8. Punktschweißklebverbindung nach einem der Ansprüche 1 bis 3, **dadurch gekennzeichnet, dass** die Formschwelle durch jeweils einen abgekanteten Randfalz (19) beider Bleche (3, 4) gebildet ist.

9. Punktschweißklebverbindung nach Anspruch 8, **dadurch gekennzeichnet, dass** der Abkantwinkel zwischen 30° und 90° liegt.

10. Punktschweißklebverbindung nach einem der Ansprüche 1 bis 3, **dadurch gekennzeichnet, dass** die Formschwelle durch eine Bördelkante (20) eines Blechteils (3) gebildet ist, die an der Längskante (21) des anderen Blechteils (4) aufgebogen ist.
